Europäisches Patentamt

European Patent Office

Office européen des brevets

(19)

(11) EP 0 639 731 B1

(12) EUROPÄISCHE PATENTSCHRIFT

(45) Veröffentlichungstag und Bekanntmachung des Hinweises auf die Patenterteilung:
07.01.1999  Patentblatt 1999/01

(51) Int Cl.6: **F16H 55/08**, B23F 21/00

(21) Anmeldenummer: 94112245.9

(22) Anmeldetag: 05.08.1994

(54) **Selbsthemmendes Doppelschneckengetriebe und Werkzeug zu dessen Herstellung**

Self-locking twin screw transmission and tool for its manufacture

Transmission autobloquante à double vis et dispositif pour sa fabrication

(84) Benannte Vertragsstaaten:
AT BE CH DE DK ES FR GB IT LI LU NL SE

(30) Priorität: 21.08.1993  DE 4328221

(43) Veröffentlichungstag der Anmeldung:
22.02.1995  Patentblatt 1995/08

(73) Patentinhaber: OCTOPUS Industrieausrüstungen Equipment GmbH
30853 Langenhagen (DE)

(72) Erfinder: Panjuchin, Wiktor Wadimowitsch
600009 Wladimir-9 (RU)

(74) Vertreter: König, Norbert, Dipl.-Phys. Dr.
Patentanwälte
Leine & König
Burckhardtstrasse 1
30163 Hannover (DE)

(56) Entgegenhaltungen:
WO-A-93/03297           FR-A- 719 727
FR-A- 984 519           FR-A- 2 024 046
US-A- 1 653 686         US-A- 3 386 305
US-A- 3 481 215

**Beschreibung**

Die Erfindung betrifft ein selbsthemmendes Doppelschneckengetriebe mit parallelen Achsen mit zwei Schnecken mit evolventer Pfeilverzahnung und linearem Kontakt der beiden Schnecken, sowie ein Werkzeug zu dessen Herstellung.

Die Besonderheit solcher Getriebe ist der sehr große Zahnneigungswinkel, wodurch die Möglichkeit besteht, für das Schneiden der Zähne die bei Schrägzahnrädern, Spinnen oder Schnecken angewendeten Fertigungsverfahren einzusetzen.

Die Aufgabe der vorliegenden Erfindung besteht darin, ein einfach herstellbares selbsthemmendes Doppelschneckengetriebe anzugeben, und ferner ein einfaches Werkzeug, mit dem auf einfache und reproduzierbare Weise ein Doppelschneckengetriebe mit quasi evolventem Profil für dessen Zähne herstellbar ist.

Diese Aufgabe wird durch die Ausbildung gemäß Kennzeichen des Anspruchs 1 gelöst. Ein Werkzeug zur Herstellung des Doppelschneckengetriebes ist im Anspruch 3 angegeben.

Vorteilhafte und zweckmäßige Weiterbildungen der erfindungsgemäßen Aufgabenlösungen sind in den Unteransprüchen angegeben. Die Erfindung soll nachfolgend anhand der beigefügten Zeichnung, in der ein Ausführungsbeispiel dargestellt ist, näher erläutert werden.

Es zeigt

Fig. 1        eine perspektivische Darstellung eines Doppelschneckengetriebes mit Außenverzahnung und
Fig. 2-4      Einzelheiten der geometrischen Abmessungen und Verhältnisse des Doppelschneckengetriebes nach Fig. 1.

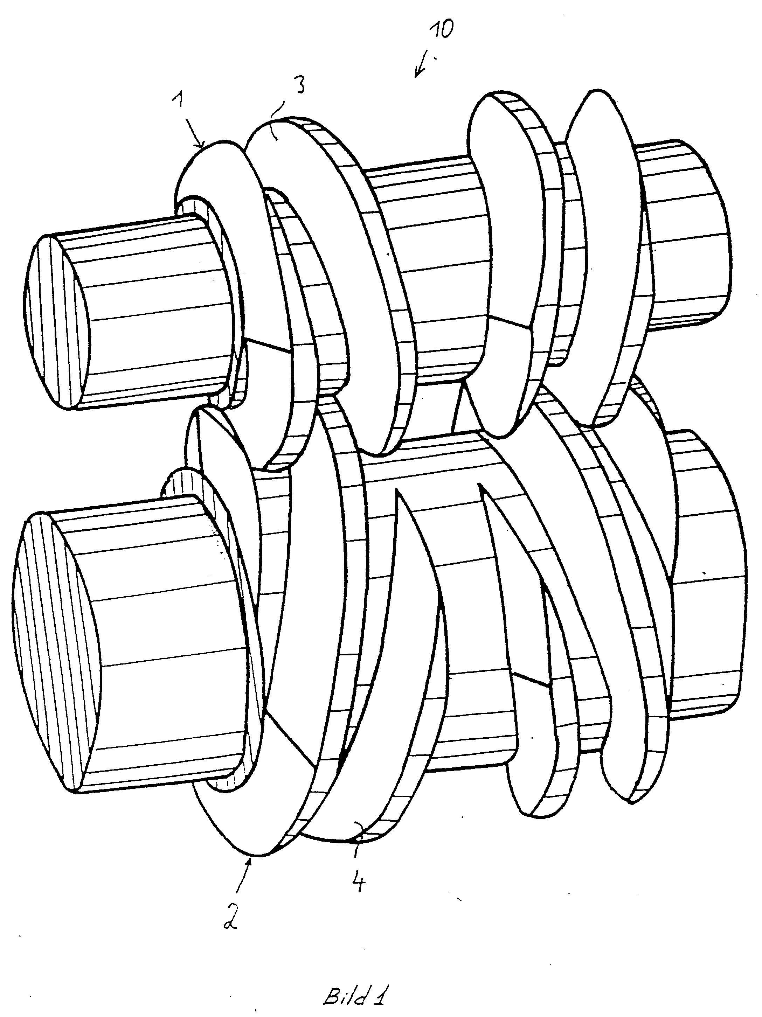

In der Zeichnung (Fig. 1) ist ein Doppelschneckengetriebe 10 dargestellt, das zur Reduzierung der Drehbewegung und der Umwandlung in eine Vorwärtsbewegung bei Vorwärtslauf und für die Selbsthemmung beim Rückwärtslauf konzipiert ist. Das Doppelschneckengetriebe besteht aus einer ersten Schnecke 1 und einer zweiten Schnecke 2 jeweils mit Schräg- oder Pfeilzähnen 3 und 4 in Form mehrerer Windungen.

Die Schnecken 1 und 2 weisen Evolventenprofile auf, die zumindest angenähert mit Hilfe eines in eine Leit- und Zugspindeldrehmaschine eingesetzten Drehmeißels (nicht dargestellt) mit abgerundeter Schneide herstellbar sind.

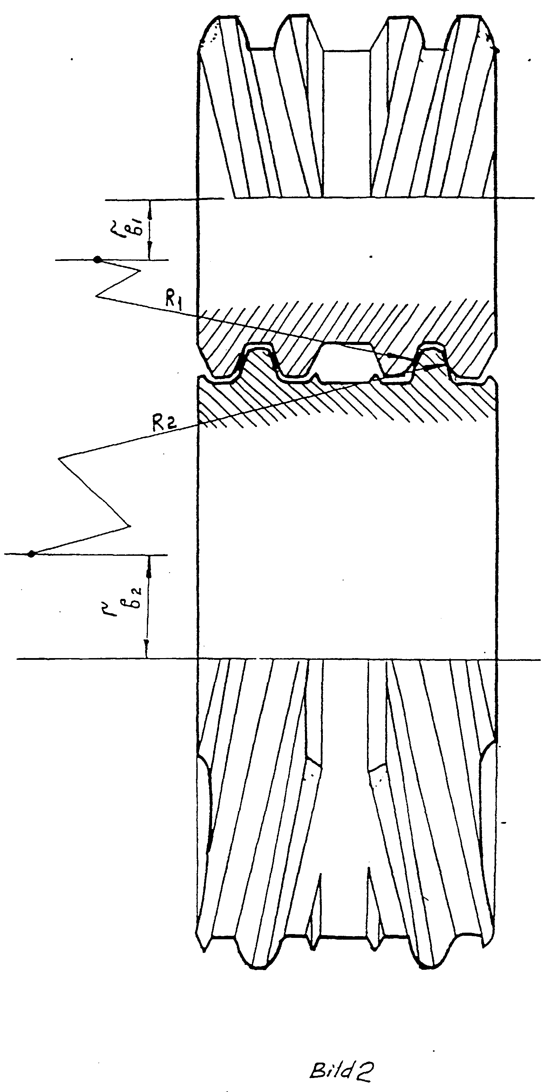

Die zur Fertigung der Evolventenprofile geeigneten Krümmungsradien R1 und R2 des Drehmeißels, die in der Fig. 2 mit eingezeichnet sind, errechnen sich wie folgt:

Die Radien $r_{m1}$ und $r_{m2}$ der durch den Kontaktpunkt M1 der Zähne der Schnecken 1 und 2 verlaufenden Kreise sollen als Arbeitsradien bezeichnet werden.

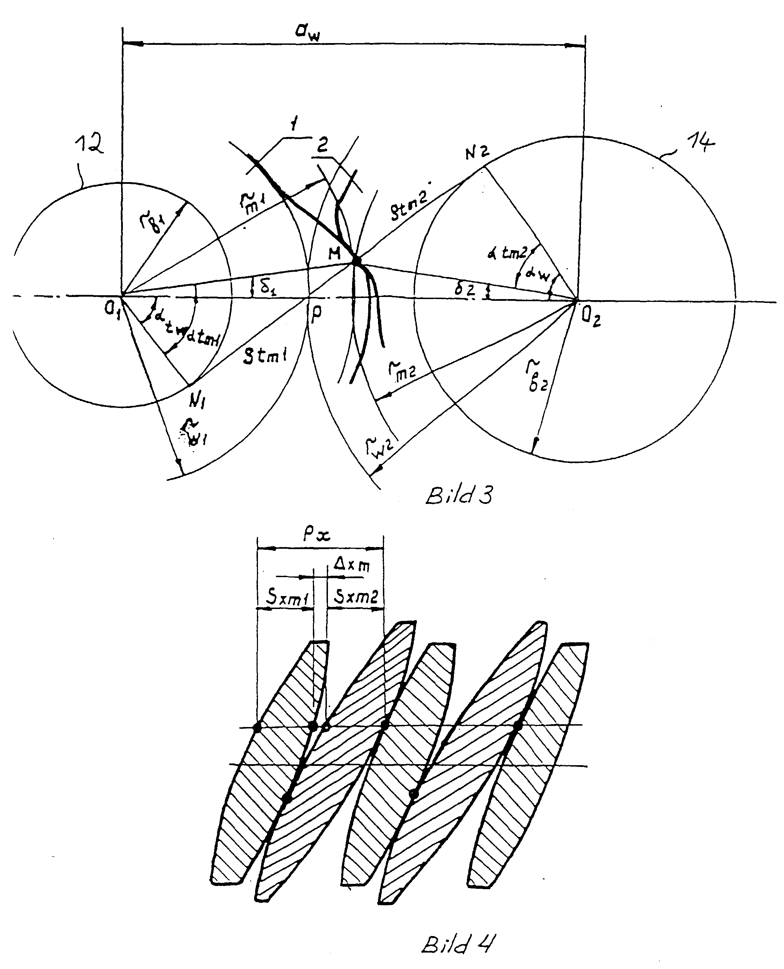

Die Krümmungsradien $\rho_{tm1}$ und $\rho_{tm2}$ der Evolventenprofile der Schnecken 1 und 2 im Querschnitt im Kontaktpunkt M um die Mittelpunkte O1 und O2 der Grundkreise 12 und 14 der Schnecken 1 und 2 mit den Grundkreisradien $r_{B1}$ und $r_{B2}$ werden bestimmt aus den Dreiecken $\Delta O_1 N_1 M$ und $\Delta O_2 N_2 M$ gebildet aus den Tangenten $MN_1$ und $MN_2$ vom Kontaktpunkt M an die Grundkreise 12 und 14, den normalen $O_1 N_1$ und $O_2 N_2$ und den Radiusvektoren $O_1 M$ und $O_2 M$ zu dem Kontaktpunkt M, vgl. Fig. 3, wie folgt:

$$\rho_{tm1} = \sqrt{r_{m1}^2 - r_{B1}^2} \; ; \; \rho_{tm2} = \sqrt{r_{m2}^2 - r_{B2}^2} \tag{1}$$

Mit Hilfe des Menjeschen Theorems bestimmen sich die Krümmungsradien $\rho_{nm1}$ und $\rho_{nm2}$ der Evolvente im Querschnitt zu:

$$\rho_{nm1} = \rho_{tm1} / \cos\beta_{B1} ; \; \rho_{nm2} = \rho_{tm2} / \cos\beta_{B2}, \tag{2}$$

wobei: $\beta_{B1} = \beta_{B2} = \beta$ der Zahnneigungswinkel an den Grundkreisen der Schnecken 1 und 2 ist.

Die Krümmungsradien $\rho_{xm1}$ und $\rho_{xm2}$ im Längsschnitt ergeben sich mit Hilfe desselben Theorems und der Formel (1) zu:

$$\rho_{xm1} = \rho_{nm1} \cdot \sin\beta_{B1} = \rho_{tm1} \cdot tg\beta_{B1} ; \; \rho_{xm2} = \rho_{nm2} \cdot \sin\beta_{B2} = \rho_{tm2} \cdot tg\beta_{B2}. \tag{3}$$

Wenn man die Radien $R_1$ und $R_2$ mit den Radien $\rho_{xm1}$ und $\rho_{xm2}$ gleichsetzt, dann ergibt sich eine Verzahnung, die einer Evolventenverzahnung praktisch äquivalent ist, da die Zahnhöhe in diesem Fall gering ist und die Abweichung des Kreisprofils von dem Evolventenprofil normalerweise nicht über die Bearbeitungstoleranz hinausgeht. Um die Möglichkeit eines Kantenkontakts zu vermeiden (z. B. als Folge einer ungenauen Bearbeitung), ist es zweckmäßig, die Radien $R_1$ und $R_2$ etwas kleiner als $\rho_{xm1}$ und $\rho_{xm2}$ zu wählen, so wie bei den Getrieben von Novikov mit den Querschnittprofilen MH 4229-63. Somit lassen sich durch die Verwendung von Drehmeißeln mit runden Schneiden die Schnecken fertigen, die in der Verzahnung einen Punktkontakt haben, der dem Kontakt in den Novikov-Getrieben ähnlich ist.

Wenn wir $tg\beta_B$ aus Formel (3) bestimmen:

$$tg\beta_{B1} / tg\beta_{m1} = r_{B1} / r_{m1}; \; tg\beta_{B2} / tg\beta_{m2} = r_{B2} / r_{m2} \tag{4}$$

und die Formeln (1) und (3) berücksichtigen, ergibt sich für $R_1$ und $R_2$:

$$R_1 = 0{,}95 \cdot r_{B1} \cdot tg\beta_{m1} \cdot \sqrt{1-(r_{B1}/r_{m1})^2}; \; R_2 = 0{,}95 \cdot r_{B2} \cdot tg\beta_{m2} \cdot \sqrt{1-(r_{B2}/r_{m2})^2}, \tag{5}$$

wobei $\beta_{m1}$ und $\beta_{m2}$ die Zahnneigungswinkel auf den Arbeitsradien sind.

Eine Verzahnung, die der Evolventenverzahnung äquivalent ist, sowie eine Verzahnung mit dem Punktkontakt, kann man auch dann erreichen, wenn nur eine Schnecke ein Kreisprofil hat und die andere - ein Archimedisches Profil. Dabei muß der Krümmungsradius der Schnecke mit dem Kreisprofil um 10% kleiner sein, als der entsprechende zurückgeführte Krümmungsradius der Evolventenprofile.

Die Verzahnung von zwei Archimedischen Schnecken, die mit den Drehmeißeln mit den geraden Schneiden geschnitten werden, hat anfangs einen Kantenkontakt, aber nach kurzem Einlaufen nimmt der Kontaktfleck dieselbe Form an, wie bei den Evolventenschnecken. Deswegen ist die Anwendung solcher Schnecken nur bei unbedingtem einleitendem Läppen und bei niedrigen Anforderungen an das Spiel der Verzahnung möglich.

Die geometrische Berechnung von Doppelschneckengetrieben mit Punktkontakt der hier betrachteten Art mit Selbsthemmung [1] setzt voraus, daß der Vorwärtslauf des Getriebes bei jeder Betriebsweise gewährleistet wird: sowohl beim Fahrbetrieb als auch bei der Abbremsung. Das Verzahnungsschema eines solchen Getriebes mit Kontakt im Punkt M ist in der Fig. 3 dargestellt.

Bei der Projektierung eines Getriebes, dessen Glieder Schnecken sind, braucht man, wenn der Achsenabstand frei wählbar sein soll, folgende Ausgangswerte: Zahl der Zähne $Z_1$ und $Z_2$, minimaler Wert $f_{min}$ und maximaler Wert $f_{max}$ des Gleitreibungskoeffizienten in der Verzahnung, den Profilwinkel im Normalschnitt des zweiten Rades $\alpha_{nm2}$ und den Achsengang $P_x$, der aufgrund der Festigkeitsberechnung gewählt wird.

Die Zahnneigungswinkel $\beta_{m1}$ und $\beta_{m2}$ auf den Arbeitsradien werden ausgehend unter der Bedingung der Getriebeselbsthemmung bestimmt [1] zu

$$\cos\beta_{m1} \leq tg\alpha_{nm1} \sqrt{\sqrt{0{,}25 + f_{min}^2/\sin^2\alpha_{nm1}} - 0{,}5}; \tag{6}$$

$$\cos\beta_{m2} > tg\alpha_{nm2} \sqrt{\sqrt{0{,}25 + f_{max}^2/\sin^2\alpha_{nm2}} - 0{,}5}; \tag{7}$$

wobei $\alpha_{nm1}$ der Profilwinkel im Normalschnitt der ersten Schnecke ist.
Mit Hilfe der Beziehungen

$$\cos\gamma = \sin\beta_{m1} \cdot \cos\alpha_{nm1}; \tag{8}$$

$$\cos\gamma = \sin\beta_{m2} \cdot \cos\alpha_{nm2}, \tag{9}$$

wobei $\gamma$ der Winkel zwischen der Normalen und der Schnekenachse ist, der zusammen mit dem Winkel $\beta_B$ 90° ergibt, können die Gleichungen (6) und (7) folgenderweise dargestellt werden:

$$tg\beta_{m1} \geq \sqrt{\cos^2\gamma/f_{min}^2 + ctg^2\gamma}; \tag{10}$$

$$tg\beta_{m2} < \sqrt{\cos^2\gamma/f_{max}^2 + ctg^2\gamma}. \tag{11}$$

Die Seitenflächen der Zähne sind Schraubenflächen mit den Steigungswinkeln $\lambda_{m1}$ und $\lambda_{m2}$ auf den Arbeitsradien, die nach folgenden Formeln bestimmt werden:

$$\lambda_{m1} = 90° - \beta_{m1}; \qquad \lambda_{m2} = 90° - \beta_{m2} \tag{12}$$

Die Arbeitsradien der Schnecken können mit folgenden Formeln ausgedrückt werden [4]:

$$r_{m1} = P_x \cdot z_1 \cdot tg\beta_{m1}/2\pi; \qquad r_{m2} = P_x \cdot z_2 \cdot tg\beta_{m2}/2\pi. \tag{13}$$

Unter Berücksichtigung, daß $tg\beta_B = ctg\gamma$ können die Radien der Schneckengrundkreise nach diesen Formeln bestimmt werden:

$$r_{B1} = P_x \cdot z_1 \cdot ctg\gamma/2\pi; \qquad r_{B2} = P_x \cdot z_2 \cdot ctg\gamma/2\pi. \tag{14}$$

Aus $\Delta O_1 N_1 M$ und $\Delta O_2 N_2 M$ (Fig. 3) unter Berücksichtigung der Formeln (13) und (14) finden wir die Profilwinkel im Querschnitt $\alpha_{tm1}$ und $\alpha_{tm2}$ zu:

$$\cos\alpha_{tm1} = ctg\beta_{m1} \cdot ctg\gamma; \qquad \cos\alpha_{tm2} = ctg\beta_{m2} \cdot ctg\gamma. \tag{15}$$

Den Achsenabstand $a_w$ finden wir aus $\Delta O_1 M O_2$ (Fig. 3). $L0_1 M O_2 = LO_1 M N_1 - LO_2 M N_1$, aber $LO_1 M N_1 = 90° - \alpha_{tm1}$. $LO_2 M N_1 = 180° - LO_2 M N_2 = 180° - (90° - \alpha_{tm2})$; deswegen $LO_1 M O_2 = 90° - \alpha_{tm1} + [180° - (90° - \alpha_{tm2})] = 180° - (\alpha_{tm1} - \alpha_{tm2})$. Nach dem Kosinussatz haben wir:

$$a_w = \sqrt{r_{m1}^2 + r_{m2}^2 + 2 \cdot r_{m1} \cdot r_{m2} \cdot \cos(\alpha_{tm1} - \alpha_{tm2})}. \tag{16}$$

Die Kreisradien von Spitzen und Lücken bestimmen wir ausgehend von den Proportionen, die von dem Querschnittprofil MH 4229-63 für die Novikov-Getriebe festgelegt sind, wie folgt:

$$r_{a1} = r_{m1} + 0{,}2 \cdot P_x; \qquad r_{a2} = r_{m2} + 0{,}2 \cdot P_x; \tag{17}$$

$$r_{f1} = a_w - r_{a2} - 0{,}08 \cdot P_x; \qquad r_{f2} = a_w - r_{a1} - 0{,}08 \cdot P_x. \tag{18}$$

Die Radien der Anfangskreise $r_{w1}$ und $r_{w2}$ werden aus bekannten Beziehungen bestimmt [3]:

$$r_{w1} = z_1 \cdot a_w/(z_1 + z_2); \qquad r_{w2} = z_2 \cdot a_w/(z_1 + z_2); \tag{19}$$

oder durch die Übersetzung i zu:

$$r_{w1} = a_w/(1+i); \qquad r_{w2} = i \cdot a_w/(1+i). \tag{20}$$

Damit der Kontaktpunkt der Verzahnung außerhalb des Eingriffspunktes liegt, muß folgende Bedingung erfüllt werden:

$$r_{w2} > r_{a2}. \tag{21}$$

Den Verzahnungswinkel im Querschnitt $\alpha_{tw}$ finden wir aus Fig. 3 zu:

$$\cos\alpha_{tw} = r_{B1}/r_{w1} = r_{B2}/r_{w2}. \tag{22}$$

Mit Hilfe der Winkel $\delta_1$ und $\delta_2$ zwischen den Radiusvektoren zu dem Punkt M und der Mittelpunktsverbindungslinie $O_1O_2$

$$\delta_1 = \alpha_{tm1}-\alpha_{tw}; \qquad \delta_2 = \alpha_{tw} - \alpha_{tm2}, \tag{23}$$

kann man den einen Arbeitsradius durch den anderen ausdrücken, z. B.:

$$r_{m2} = \sqrt{a_w^2+r_{m1}^2-2\cdot a_w\cdot r_{m1}\cdot\cos\delta_1}. \tag{24}$$

Nachfolgend soll die Dicke eines Zahnes der Schnecken an den Arbeitsradien bestimmt werden. Da die Zahnneigungswinkel der Schnecken 1 und 2 an den Arbeitsradien verschieden sind, gibt es zwischen den Seitenflächen der Zähne ein Axialspiel $\Delta_{xm}$, das in der Fig. 4 gezeigt ist. Diese Fig. 4 zeigt einen Schnitt des Getriebes durch die Ebene, die durch den Kontaktpunkt senkrecht zu der Verbindungslinie $O_1O_2$ verläuft. Die Größe des Spiels $\Delta_{xm1}$ wird bestimmt durch die Differenz zwischen den axialen Verschiebungen von zwei beliebigen Punkten, die sich entlang dem Bogen des Arbeitskreises bewegen, die den verdoppelten Winkeln $\delta_1$ und $\delta_2$ entsprechen, zu:

$$\Delta_{xm} = P_x\cdot(\delta_2\cdot r_{m2}\cdot ctg\beta_{m2}-\delta_1\cdot r_{m1}\cdot ctg\beta_{m1}), \tag{25}$$

oder, unter Berücksichtigung von (13) und (23):

$$\Delta_{xm} = P_x\cdot[\alpha_{tw}\cdot(z_1+z_2)-\alpha_{tm1}\cdot z_1-\alpha_{tm2}\cdot z_2]/\pi. \tag{26}$$

Eine gleiche axiale Zahndicke $S_{xm}$ auf den Arbeitsradien der Schnecken 1 und 2 vorausgesetzt ($S_{xm1} = S_{xm2} = S_{xm}$) ergibt gem. Fig. 4:

$$S_{xm} = 0{,}5\cdot(P_x-\Delta_{xm}) = P_x\cdot\pi\cdot[\alpha_{tw}\cdot(z_1+z_2)-\alpha_{tm1}\cdot z_1-\alpha_{tm2}\cdot z_2]/2\pi, \tag{27}$$

worin alle Winkel in Radiant ausgedrückt sind. Wenn die Winkel in Grad ausgedrückt werden, so lautet die Gleichung wie folgt:

$$S_{xm} = 0{,}5\cdot P_x\cdot 1-[\alpha_{tw}\cdot(z_1+z_2)-\alpha_{tm2}\cdot z_1-\alpha_{tm2}\cdot z_2]/180°. \tag{28}$$

Die Zahndicke der Schnecken in senkrechter Richtung $S_{nm1}$ und $S_{nm2}$ wird bestimmt durch:

$$S_{nm1} = S_{xm}\cdot\sin\beta_{m1}; \qquad S_{nm2} = S_{xm}\cdot\sin\beta_{m2}. \tag{29}$$

Die Höhe h, auf der die Zahndicke der Schnecken gemessen wird, ist gleich:

$$h = r_a - r_m = 0{,}2\cdot P_x. \tag{30}$$

Die Breite der zweiten Schnecke (oder des halben Pfeilzahnes eines Pfeilzahnrades) setzen wir gleich der Arbeitsbreite des Kranzes $B_w$ voraus, die aus der Bedingung des ausreichenden Überdeckungskoeffizienten bestimmt wird. Der Hauptteil dieses Koeffizienten in den betrachteten Getrieben ist dessen axiale Komponente $\varepsilon_\beta$[2]. Die Breite der ersten Schnecke setzen wir um 10% größer voraus:

$$b_2 = B_w = P_x \cdot \varepsilon_\beta + S_{nm2} \cdot \sin\beta_{m2}; \qquad b_1 = 1{,}1 \cdot b_2. \tag{31}$$

Die Breite der technologischen Rillen setzen wir wie folgt voraus:

$$c_1 = 0{,}8 \cdot P_x; \qquad c_2 = 1{,}1 \cdot c_1. \tag{32}$$

Die Gesamtbreite der Schnecken $B_1$ und $B_2$ ist gleich:

$$B_1 = 2 \cdot b_1 + c_1; \qquad B_2 = 2 \cdot b_2 + c_2. \tag{33}$$

Der Gewindegang $t_1$ und $t_2$ wird nach folgenden Formeln bestimmt:

$$t_1 = P_x \cdot z_1; \qquad t_2 = P_x \cdot z_2. \tag{34}$$

Wenn der Achsenabstand und die Übersetzung vorgegeben sind, muß die geometrische Berechnung mit der Wahl der Teilung beginnen. Dafür wird erst der Achsenabstand bei der Einzelteilung errechnet. Die gesuchte Teilung ist dann der Quotient aus dem vorgegebenen und für dem die Einzelteilung errechneten Achsenabstand. Wenn nötig, kann die Teilung bis zum nächsten passenden Wert mit der nachfolgenden Prüfung der Erfüllugn von Selbsthemmungsbedingungen abgerundet werden.

I. Beispiel der geometrischen Berechnung bei frei wählbarem Achsenabstand

Betrachten wir die Reihenfolge der geometrischen Berechnung eines selbsthemmenden Getriebes bei frei wählbarem Achsenabstand mit folgenden Ausgangswerten:

$$P_x = 10\text{mm}; \; z_1 = 1; \; z_2 = 5; \; f_{min} = 0{,}1; \; f_{max} = 0{,}2; \; \alpha_{nm2} = 20°.$$

1. Aus (7) und (12) bestimmen wir den Zahnneigungswinkel und den Steigungswinkel der Schraubenlinie der zweiten Schraube auf dem Arbeitshalbmesser:

$$\cos\beta_{m2} = tg20° \sqrt{\sqrt{0{,}25+0{,}2^2/\sin^2 20°} - 0{,}5} = 0{,}189 \; ;$$

$$\beta_{m2} = 79°07'; \qquad \lambda_{m2} = 90° - 79°07' = 10°53'.$$

2. Aus (9) bestimmen wir den Winkel zwischen der Normale und der Drehachse:

$$\cos\gamma = \sin 79°07' \cdot \cos 20° = 0{,}923; \; \gamma = 22°40'.$$

3. Aus (10) und (12) bestimmen wir den Zahnneigungswinkel und den Steigungswinkel der Schraubenlinie der ersten Schraube auf dem Arbeitshalbmesser:

$$tg\beta_{m1} = \sqrt{\cos^2 22°40'/0{,}1^2 + ctg^2 22°40'} = 9{,}534;$$

$$\beta_{m1} = 84°01'; \qquad \alpha_{m1} = 90° - 84°01' = 5°59'.$$

4. Aus (8) finden wir den Profilwinkel im Normalschnitt der ersten Schraube:

$$\cos\alpha_{nm1}=\cos22°40'/\sin84°01'=0{,}928; \qquad \alpha_{nm1}=21°53'.$$

5. Aus (13) bestimmen wir die Grundkreisradien der Schrauben:

$$r_{m1}=10\cdot1\cdot tg84°01'/2\pi=15{,}17\,mm; \qquad r_{m2}=10\cdot5\cdot tg79°07'/2\pi=41{,}36\,mm.$$

6. Aus (14) finden wir die Grundkreishalbmesser der Zahnräder:

$$r_{B1}=10\cdot1\cdot ctg22°40'/2\pi=3{,}81\,mm; \qquad r_{B2}=10\cdot5\cdot ctg22°40'/2\pi=19{,}06\,mm.$$

7. Aus (15) bestimmen wir die Profilwinkel im Querschnitt der Schnecken:

$$\cos\alpha_{tm1} = ctg84°01'\cdot ctg22°40' = 0{,}260; \qquad \alpha_{tm1} = 74°57';$$

$$\cos\alpha_{tm2} = ctg79°07'\cdot ctg22°40' = 0{,}461; \qquad \alpha_{tm2} = 62°34'.$$

8. Aus (16) erhalten wir den Achsenabstand:

$$a_w=\sqrt{15{,}17^2+41{,}36^2+2\cdot15{,}17\cdot41{,}36\cdot\cos(74°57'-62°34')} =56{,}27\,mm.$$

9. Aus (17) erhalten wir die Kreisradien der Spitzen:

$$r_{a1} = 15{,}17+0{,}2\cdot10 = 17{,}17\,mm; \qquad r_{a2} = 41{,}36+0{,}2\!:\!10 = 43{,}36\,mm.$$

10. Aus (18) erhalten wir die Kreisradien der Lücken:

$$r_{f1} = 56{,}27-43{,}36-0{,}08\cdot10 = 12{,}11\,mm;$$

$$r_{f2} = 56{,}27-17{,}17-0{,}08\cdot10 = 38{,}30\,mm.$$

11. Aus (19) erhalten wird die Radien der Anfangskreise und prüfen die Erfüllung der Bedingung (21), daß der Kontaktpunkt der Verzahnung außerhalb des Eingriffspunktes liegt:

$$r_{w1} = 1\cdot56{,}27/(1+5)=9{,}38\,mm; \qquad r_{w2} = 5\cdot56{,}27/(1+5) = 46{,}89\,mm;$$

$$46{,}89 > 43{,}36.$$

Die Bedingung ist erfüllt.

12. Aus (22) bestimmen wir den Verzahnungswinkel im Querschnitt:

$$\cos\alpha_{tw} = 3{,}81/9{,}38 = 0{,}406; \qquad \alpha_{tw} = 66°02'.$$

13. Aus (28) ermitteln wir die axiale Zahndicke auf dem Arbeitsradius:

$$S_{xm}=0{,}5\cdot10\cdot\{12[66°02'\cdot(1+5)-74°57'\cdot1-62°34'\cdot5]/180°\}=4{,}77\,mm.$$

14. Aus (29) erhalten wir die Zahndicke der Schnecken in senkrechter Richtung:

$$S_{nm1} = 4{,}77 \cdot \sin 84°01' = 4{,}74\,mm; \qquad S_{nm2} = 4{,}77 \cdot \sin 79°07' = 4{,}68\,mm.$$

15. Aus (30) bestimmen wir die Höhe, auf der die Zahndicke der Schnecken gemessen wird:

$$H = 0{,}2 \cdot 10 = 2\,mm.$$

16. Aus (31) erhalten wir die Breite der halben Pfeilzähne der Schnecken bei $\varepsilon_\beta$=1,2:

$$b_2 = 10 \cdot 1{,}2 + 4{,}68 \cdot \sin 79°07' = 16{,}60\,mm; \qquad b_1 = 1{,}1 \cdot 16{,}6 = 18{,}26\,mm.$$

17. Aus (32) finden wir die Breite der technologischen Rillen:

$$c_1 = 0{,}8 \cdot 10 = 8\,mm; \qquad c_2 = 1{,}8 \cdot 8 = 8{,}8\,mm.$$

18. Aus (33) bestimmen wir die Gesamtbreite der Schnecken:

$$B_1 = 2 \cdot 18{,}26 + 8 = 44{,}5\,mm; \qquad B_2 = 2 \cdot 16{,}6 + 8{,}8 = 42\,mm.$$

19. Aus (34) bestimmen wir den Gewindegang:

$$t_1 = 10 \cdot 1 = 10\,mm; \qquad t_2 = 10 \cdot 5 = 50\,mm.$$

20. Aus (5) bestimmen wir die Krümmungsradien der für die Fertigung von Schnecken mit rundem Zahnprofil notwendigen Drehmeißeln:

$$R_1 = 0{,}95 \cdot 3{,}81 \cdot tg84°01' \cdot \sqrt{1 - (3{,}81/15{,}17)^2} = 33{,}40\,mm.$$

$$R_2 = 0{,}95 \cdot 19{,}06 \cdot tg79°07' \cdot \sqrt{1 - (19{,}06/41{,}36)^2} = 83{,}53\,mm.$$

II. Beispiel der geometrischen Berechnung bei vorgegebenem Achsenabstand.

Beim Ersetzen von herkömmlichen Getrieben durch selbsthemmende Getriebe in bereits vorhandenen Getriebegehäusen sind der Achsenabstand $a_w$, die Übersetzung i und die Schneckenbreite $B_1$ und $B_2$ vorgegebene Größen. Betrachten wir die Reihenfolge der geometrischen Berechnung in diesem Fall mit folgenden Ausgangswerten:

$$a_w = 30\ mm;\ B_1 = 19\ mm;\ B_2 = 17\ mm;\ i = 6;\ t_{min} = 0{,}1;$$

$$f_{max} = 0{,}15; \qquad \alpha_{nm1} = 20°.$$

1. Wir nehmen an, daß $P_x = 1$; $Z_1 = 1$, $Z_2 = 6$.
2. Aus (6) und (12) bestimmen wir den Zahnneigungswinkel und den Steigungswinkel der Schraubenlinie der ersten Schnecke auf dem Arbeitsdurchmesser:

$$\cos\beta_{m1} = tg20° \sqrt{\sqrt{0{,}25 + 0{,}1^2/\sin^2 20°} - 0{,}5} = 0{,}102; \qquad \beta_{m1} = 84°07';$$

$$\lambda_{m1} = 90°\text{-}84°07' = 5°53'.$$

3. Aus (8) erhalten wir den Winkel zwischen der Normalen und der Schnecke:

$$\cos\gamma = \sin84°07'\cdot\cos20° = 0,935; \qquad \gamma = 20°49'.$$

4. Aus (11) und (12) bestimmen wir den Zahnneigungswinkel und den Steigungswinkel der Schraubenlinie der zweiten Schnecke auf dem Arbeitsdurchmesser:

$$tg\beta_{m2} = \sqrt{\cos^2 20°49'/0,15^2+ctg^2 20°49'} = 6,764;$$

$$\beta_{m2} = 81°35'; \qquad \lambda_{m2} = 90°\text{-}81°35' = 8°25'.$$

5. Aus (13) erhalten wir die Arbeitsradien der Schnecken:

$$r_{m1} = 1\cdot1\cdot tg84°07'/2\pi = 1.55\,mm; \qquad r_{m2} = 1\cdot6\cdot6,764/2\pi = 6,37\,mm.$$

6. Aus (15) finden wir die Profilwinkel im Querschnitt der Schnecke:

$$\cos\alpha_{tm1} = ctg84°07'\cdot ctg20°49' = 0,271; \qquad \alpha_{tm1} = 74°17';$$

$$\cos\alpha_{tm2} = ctg81°35'\cdot ctg20°49' = 0,389; \qquad \alpha_{tm2} = 67°06'.$$

7. Aus (16) bestimmen wir den Achsenabstand bei der Einzelteilung:

$$a_w = \sqrt{1,55^2+6,37^2+2\cdot1,55\cdot6,37\cdot\cos(74°17'\text{-}67°06')} = 7,91\,mm.$$

8. Die gesuchte Teilung ist:

$$P_x = 30/7,91 = 3,79\,mm.$$

Wir wählen $P_x$ = 4 mm.

9. Aus (13) finden wir den Arbeitshalbmesser der ersten Schnecke:

$$r_{m1} = 4\cdot1\cdot tg84°07'/2\pi = 6,18\ mm.$$

10. Aus (14) erhalten wir die Grundkreisradien der Schnekken:

$$r_{B1}=4\cdot1\cdot ctg20°49'/2\pi = 1,68\,mm; \qquad r_{B2} = 4\cdot6\cdot ctg20°49'/2\pi = 10,05\,mm.$$

11. Aus (19) erhalten wir die Radien der Anfangskreise der Schnecken:

$$r_{w1} = 1\cdot30/(1+6) = 4,29\,mm; \qquad r_{w2} = 6\cdot30/(1+6) = 25,71\,mm.$$

12. Aus (22) bestimmen wir den Verzahnungswinkel im Querschnitt:

EP 0 639 731 B1

$$\cos\alpha_{tw} = 1{,}68/4{,}29 = 0{,}391; \qquad \alpha_{tw} = 66°59'.$$

13. Aus (23) finden wir den Winkel zwischen dem Radiusvektor des Kontaktpunktes und der Mittellinie $O_1O_2$:

$$\delta_1 = 74°17' - 66°59' = 7°18'.$$

14. Aus (24) erhalten wir den Arbeitsradius der zweiten Schnecke:

$$r_{m2} = \sqrt{30^2 + 6{,}18^2 - 2\cdot30\cdot6{,}18 + \cos7°18'} = 23{,}88\,mm.$$

15. Aus (13) und (12) bestimmen wir den neuen Wert des Zahnneigungswinkels und des Steigungswinkels der Schraubenlinie der zweiten Schnecke auf dem Arbeitsradius:

$$tg\beta_{m2} = 23{,}88\cdot2\pi/4\cdot6 = 6{,}252; \qquad \beta_{m2} = 80°55'; \qquad \lambda_{m2} = 90° - 80°55' = 9°05'.$$

16. Prüfen wir die Erfüllung der Bedingung (11):

$$80°55' < 81°35'.$$

Die Bedingung ist erfüllt. Die Nichterfüllung der Bedingung (11) hätte bedeutet, daß wir die Teilung falsch abgerundet hätten.

17. Aus (9) erhalten wir den Profilwinkel der zweiten Schnecke im Normalschnitt:

$$\cos\alpha_{nm2} = \cos20°49'/\sin80°55' = 0{,}947; \qquad \alpha_{nm2} = 18°48'.$$

18. Aus (15) erhalten wir den Profilwinkel der zweiten Schnecke im Querschnitt:

$$\cos\alpha_{tm2} = ctg80°55'\cdot ctg20°49' = 0{,}421; \qquad \alpha_{tm2} = 65°07'.$$

19. Aus (17) erhalten wir die Kreisradien der Spitzen:

$$r_{a1} = 6{,}18 + 0{,}2\cdot4 = 6{,}98\,mm; \qquad r_{a2} = 23{,}88 + 0{,}2\cdot4 = 24{,}68\,mm.$$

20. Aus (18) finden wir die Kreisradien der Lücken:

$$r_{f1} = 30 - 24{,}68 - 0{,}08\cdot4 = 5{,}00\,mm; \qquad r_{f2} = 30 - 6{,}98 - 0{,}08\cdot4 = 22{,}70\,mm.$$

21. Prüfen wir die Erfüllung der Bedingung (21), daß der Kontaktpunkt der Verzahnung außerhalb des Eingriffspunktes liegt:

$$25{,}71 > 24{,}68.$$

Die Bedingung ist erfüllt.

22. Aus (28) erhalten wir die axiale Zahndicke auf dem Arbeitsradius:

$$S_{xm} = 0{,}5\cdot4\ \{1 - [66°59'\cdot(1+6) - 74°17'\cdot1 - 65°07'\cdot6]/180°\} = 1{,}96\,mm.$$

10

23. Aus (29) erhalten wir die Zahndicke der Schnecken in senkrechter Richtung:

$$S_{nm1} = 1{,}96 \cdot \sin 84°07' = 1{,}95; \qquad S_{nm2} = 1{,}96 \cdot \sin 80°55' = 1{,}93\, mm.$$

24. Aus (30) bestimmen wir die Höhe, auf der die Zahndicke der Schnecken gemessen wird:

$$h = 0{,}2 \cdot 4 = 0{,}8\ mm.$$

25. Aus (32) und (33) finden wir die Breite der technologischen Rillen und die Breite der halben Pfeilzähne der Schnecken:

$$c_1 = 0{,}8 \cdot 4 = 3{,}2\, mm; \qquad c_2 = 3{,}2 \cdot 1{,}1 = 3{,}5\, mm;$$

$$b_1 = 0{,}5 \cdot (19\text{-}3{,}2) = 7{,}9\, mm; \qquad b_2 = 0{,}5 \cdot (17\text{-}3{,}5) = 6{,}8\, mm.$$

26. Aus (31) bestimmen wir den axialen Überdeckungskoeffizienten:

$$\varepsilon_\beta = (6{,}8 - 1{,}93 \cdot \sin 80°55')/4 = 1{,}2 > 1.$$

Wenn die sich ergebende Größe $\varepsilon_\beta$ nicht groß genug ist, so kann man entweder die Breite der Schnecken oder die Zahl der Zähne vergrößern. Im vorliegenden Fall könnte man z. B. nehmen $z_1 = 2$, $z_2 = 12$.

27. Aus (34) erhalten wir den Gewindegang:

$$t_1 = 4 \cdot 1 = 4\ mm; \qquad t_2 = 4 \cdot 6 = 24\, mm.$$

28. Aus (5) bestimmen wir die Krümmungsradien der für die Fertigung der Schnecken mit rundem Zahnprofil notwendigen Drehmeißeln zu:

$$R_1 = 0{,}95 \cdot 1{,}68 \cdot tg84°07' \cdot \sqrt{1\text{-}(1{,}68/6{,}18)^2} = 14{,}87\, mm;$$

$$R_2 = 0{,}95 \cdot 10{,}05 \cdot tg80°55' \cdot \sqrt{1\text{-}(10{,}05/23{,}88)^2} = 54{,}16\, mm.$$

III. Für die Berechnung der Kontaktfestigkeit kann man die Hertzsche Formel für Zylinderflächen:

$$\sigma_H = 0{,}418 \cdot \sqrt{Q \cdot E/(l \cdot \rho_{np.})}$$

heranziehen,
wobei:

Q -    Normalkraft,
E -    Elastizitätsmodul,
I -    Länge der Kontaktlinie,
$\rho np.$ -    reduzierter Krümmungsradius,

$$Q = \frac{M_2}{2 \cdot r_{B2} \cdot \sin\gamma (1\text{-}tg\alpha_{tm2}/tg\alpha_{tm1})},$$

wobei $M_2$ das Belastungsmoment auf der Schneckenachse ist,

$$l = \sqrt{r_{a1}^2 - r_{B1}^2} + \sqrt{r_{a2}^2 - r_{B2}^2} - a_w \cdot \sin\alpha_{tw}$$

und

$$\frac{1}{\rho_{np.}} = \frac{\sin\gamma}{\sqrt{r_{m1}^2 - r_{B1}^2}} + \frac{\sin\gamma}{\sqrt{r_{m2}^2 - r_{B2}^2}}$$

ist.

IV. Die Biegefestigkeit errechnet sich wie folgt:

Für eine annähernde Berechnung betrachten wir einen Zahnschnitt durch eine zu dem Kreis der Lücken tangentiale Ebene. Der Biegungshebelarm a ist

$$a = r_{m1} - r_{f1} - S_{xm} \cdot tg\alpha_{nm1}/2;$$

Die Querschnittshöhe B (maximale) ist:

$$B = S_{xm} + 2 \cdot (r_{m1} - r_{f1}) \cdot tg\alpha_{nm1};$$

Die Querschnittslänge c ist:

$$c = 2 \cdot \sqrt{2 \cdot (r_{a1} - r_{f1}) \cdot r_{a1} - (r_{a1} - r_{f1})^2} = 2 \cdot \sqrt{r_{a1}^2 - r_{f1}^2}.$$

Das Trägheitsmoment w des Querschnitts beträgt:

$$w \approx c \cdot (B')^2/6;$$

wobei B' der Mittelwert der Querschnittshöhe ist.

Das Biegemoment ist

$$M_{u32} = Q \cdot \cos\alpha_{nm1} \cdot a$$

und die Biegespannung ist

$$\sigma_N = \frac{M_{u32}}{W}.$$

## Patentansprüche

1. Selbsthemmendes Doppelschneckengetriebe mit parallelen Achsen und linearem Kontakt der evolvente Pfielverzahnung aufweisenden Schnecken, **dadurch gekennzeichnet**, daß die Krümmungsradien $\rho_{nm1}$ und $\rho_{nm2}$ m Querschnitt und die mungsradien $\rho_{xm1}$ und $\rho_{xm2}$ und im Längsschnitt des Profils der Schnecken jeweils im Kontaktpunkt M der Schneckenzähne nach folgenden Gleichungen bestimmt sind:

$$\rho_{nm1} = \rho_{tm1} / \cos\beta_{B1}; \qquad \rho_{nm2} = \rho_{tm2} / \cos\beta_{B2},$$

$$\rho_{xm1} = \rho_{nm1} \cdot \sin\beta_{B1} = \rho_{tm1} \cdot tg\beta_{B1}; \qquad \rho_{xm2} = \rho_{nm2} \cdot \sin\beta_{B2} = \rho_{tm2} \cdot tg\beta_{B2},$$

worin $\rho_{tm1}$ und $\rho_{tm2}$ die Krümmungsradien eines evolventen Profils im Querschnitt im Kontaktpunkt M und $\beta_{B1}$ und $\beta_{B2}$ die Zahnneigungswinkel an den Grundkreisen der Schnecken sind, mit

$$\rho_{tm1} = \sqrt{r_{m1}^2 - r_{B1}^2} \ und \ \rho_{tm2} = \sqrt{r_{m2}^2 - r_{B2}^2} \, ,$$

worin $r_{m1}$ und $r_{m2}$ die Arbeitsradien der Kreise sind, die durch den Kontaktpunkt M verlaufen, und $r_{B1}$ und $r_{B2}$ die Grundkreisradien der Schnecken sind.

2. Selbsthemmendes Doppelschneckengetriebe nach Anspruch 1, dadurch gekennzeichnet, daß die Zahnneigungswinkel $\beta_{m1}$ und $\beta_{m2}$ auf den Arbeitsradien durch folgende Formeln bestimmt sind:

$$\cos\beta_{m1} \le tg\alpha_{nm1} \sqrt{\sqrt{0,25 + f_{min}^2/\sin^2\alpha_{nm1}} - 0,5};$$

$$\cos\beta_{m2} > tg\alpha_{nm2} \sqrt{\sqrt{0,25 + f_{max}^2/\sin^2\alpha_{nm2}} - 0,5},$$

wobei $\alpha_{nm1}$ und $\alpha_{nm2}$ die Profilwinkel der Schnecken (Räder) im Querschnitt und $f_{min}$ und $f_{max}$ der minimale und

EP 0 639 731 B1

der maximale Wert des Gleitreibungskoeffizienten in der Verzahnung sind.

3. Werkzeug mit Drehmeißeln zur Herstellung des Profils der Schnecken des selbsthemmenden Doppelschneckengetriebes nach Anspruch 1 oder 2, dadurch gekennzeichnet, daß die Drehmeißel abgerundete Schneiden mit den Krümmungsradien $R_1$ und $R_2$ aufweisen, die durch folgende Formeln bestimmt sind:

$$R_1 = 0,95 \cdot r_{B1} \cdot tg\beta_{m1} \cdot \sqrt{1 - (r_{B1}/r_{m1})^2};$$

$$R_2 = 0,95 \cdot r_{B2} \cdot tg\beta_{m2} \cdot \sqrt{1 - (r_{B2}/r_{m2})^2}.$$

## Claims

1. Self-locking double worm gear with parallel axes and linear contact of the screws with involute double helical gearing, characterised in that the radii of curvature $\rho_{nm1}$ and $\rho_{nm2}$ in the cross section and the radii of curvature $\rho_{xm1}$ and $\rho_{xm2}$ in the longitudinal section of the profile of the screws, at each contact point M of the threads of the worm gear, are determined by the following equations:

$$\rho_{nm1} = \rho_{tm1} / \cos\beta_{B1}; \qquad \rho_{nm2} = \rho_{tm2} / \cos\beta_{B2},$$

$$\rho_{xm1} = \rho_{nm1} \cdot \sin\beta_{B1} = \rho_{tm1} \cdot \tan\beta_{B1}; \qquad \rho_{xm2} = \rho_{nm2} \cdot \sin\beta_{B2} = \rho_{tm2} \cdot \tan\beta_{B2}$$

wherein $\rho_{tm1}$ and $\rho_{tm2}$ are the radii of curvature of an involute profile in cross section at the contact point M and $\beta_{B1}$ and $\beta_{B2}$ are the angles of inclination of the teeth to the base circles of the screws, where

$$\rho_{tm1} = \sqrt{r^2_{m1} - r^2_{B1}} \text{ and } \rho_{tm2} = \sqrt{r^2_{m2} - r^2_{B2}}$$

in which $r_{m1}$ and $r_{m2}$ are the working radii of the circles which pass through the contact point M and $r_{B1}$ and $r_{B2}$ are the radii of the base circles of the screws.

2. Self-locking double worm gear according to Claim 1, characterised in that the angles of inclination $\beta_{m1}$ and $\beta_{m2}$ of the teeth to the radii of the working circles are determined by the following formulae:

$$\cos\beta_{m1} \leq \tan\alpha_{nm1} \sqrt{\sqrt{0.25 + f^2_{min}/\sin^2\alpha_{nm1}} - 0.5}$$

$$\cos\beta_{m2} > \tan\alpha_{nm2} \sqrt{\sqrt{0.25 + f^2_{max}/\sin^2\alpha_{nm2}} - 0.5}$$

in which $\alpha_{nm1}$ and $\alpha_{nm2}$ are the profile angles of the screws (gears) in cross section and $f_{min}$ and $f_{max}$ are the minimum and maximum values of the coefficients of sliding friction in the gearing.

3. Tool with turning chisel for producing the profile of the screws for the self-locking double worm gear according to Claim 1 or 2, characterised in that the turning chisel has rounded cutters with radii of curvature $R_1$ and $R_2$ which are determined by the following formulae:

$$R_1 = 0.95 \cdot r_{B1} \cdot \tan\beta_{m1} \cdot \sqrt{1 - (r_{B1}/r_{m1})^2}$$

$$R_2 = 0.95 \cdot r_{B2} \cdot \tan\beta_{m2} \cdot \sqrt{1 - (r_{B2}/r_{m2})^2}.$$

14

## Revendications

1.  Engrenage autobloquant à double vis sans fin à axes parallèles et contact linéaire des vis sans fin présentant une denture chevronnée à développante,
    caractérisé en ce que les rayons de courbure $\rho_{nm1}$ et $\rho_{nm2}$ en section transversale et les rayons de courbure $\rho_{tm1}$ et $\rho_{tm2}$ en section longitudinale du profil des vis sans fin sont déterminés respectivement au point de contact M des dents de vis sans fin selon les équations suivantes :

$$\rho_{nm1} = \rho_{tm1} / \cos\beta_{B1} \, ; \, \rho_{nm2} = \rho_{tm2} / \cos\beta_{B2}$$

$$\rho_{xm1} = \rho_{nm1} \cdot \sin\beta_{B1} = \rho_{tm1} \cdot tg\beta_{B1} \, ;$$

$$\rho_{xm2} = \rho_{nm2} \cdot \sin\beta_{B2} = \rho_{tm2} \cdot tg\beta_{B2}$$

dans lesquelles $\rho_{tm1}$ et $\rho_{tm2}$ sont les rayons de courbure d'un profil à développante en section transversale au point de contact M et $\beta_{B1}$ et $\beta_{B2}$ sont les angles d'inclinaison des dents aux cercles de base des vis sans fin, avec

$$\rho_{tm1} = \sqrt{r^2_{m1} - r^2_{B1}} \text{ et } \rho_{tm2} = \sqrt{r^2_{m2} - r^2_{B2}}$$

où $r_{m1}$ et $r_{m2}$ sont les rayons de travail des cerclespassant par le point de contact M et $r_{B1}$ et $r_{B2}$ sont les rayons des cercles de base des vis sans fin.

2.  Engrenage autobloquant à double vis sans fin selon la revendication 1,
    caractérisé en ce que les angles d'inclinaison des dents $\beta_{m1}$ et $\beta_{m2}$ sur les rayons de travail sont déterminés par les formules suivantes :

$$\cos\beta_{m1} \leq tg\alpha_{nm1} \sqrt{\sqrt{0{,}25 + f^2_{min}/\sin^2\alpha_{nm1}} - 0{,}5} \, ;$$

$$\cos\beta_{m2} > tg\alpha_{nm2} \sqrt{\sqrt{0{,}25 + f^2_{max}/\sin^2\alpha_{nm2}} - 0{,}5} \, ,$$

$\alpha_{nm1}$ et $\alpha_{nm2}$ étant les angles de profil des vis sans fin (roues) en section transversale et $f_{min}$ et $f_{max}$ étant les valeurs minimale et maximale du coefficient de friction de glissement dans l'engrenage.

3.  Outillage à outils à tourner pour la production du profil des vis sans fin de l'engrenage autobloquant à double vis sans fin selon la revendication 1 ou 2,
    caractérisé en ce que les outils à tourner présentent des tranchants arrondis ayant les rayons de courbure $R_1$ et $R_2$ qui sont déterminés par les formules suivantes :

$$R_1 = 0{,}95 \cdot r_{B1} \cdot tg\beta_{m1} \cdot \sqrt{1 - (r_{B1}/r_{m1})^2} \, ;$$

$$R_2 = 0{,}95 \cdot r_{B2} \cdot tg\beta_{m2} \cdot \sqrt{1 - (r_{B2}/r_{m2})^2} \, .$$

Bild 1

*Bild 2*

Bild 3

Bild 4